## Europäisches Patentamt
## European Patent Office
## Office européen des brevets

(19)

(11) Publication number: **0 014 146**
**B1**

(12)

# EUROPEAN PATENT SPECIFICATION

(45) Date of publication of patent specification: **26.01.83**

(51) Int. Cl.³: **F 15 B 9/10** // B60T 13/24

(21) Application number: **80400092.5**

(22) Date of filing: **22.01.80**

(54) Control valve device for pneumatically operated servomotors.

(30) Priority: **29.01.79 US 6989**

(43) Date of publication of application:
**06.08.80 Bulletin 80/16**

(45) Publication of the grant of the patent:
**26.01.83 Bulletin 83/4**

(84) Designated Contracting States:
**DE FR GB IT**

(56) References cited:
**US - A - 3 106 873**
**US - A - 3 289 547**

(73) Proprietor: **THE BENDIX CORPORATION**
**Executive Offices Bendix Center**
**Southfield Michigan 48037 (US)**

(72) Inventor: **Horsting, John James**
**52212 Brookview Cr.**
**South Bend, Indiana 46637 (US)**

(74) Representative: **Huchet, André**
**Service Brevets Bendix 44, rue François 1er**
**F-75008 Paris (FR)**

## Control valve device for pneumatically operated servomotors

This invention relates to a control valve device for a servomotor of the type used to provide a power assist to an operator input to effect a brake application in a vehicle. Such servomotors usually derive power through the creation of a force developed across a movable wall by a pressure differential between a partial vacuum on one side of the wall and air at atmospheric pressure on the other side. Air is presented to the movable wall through the movement of a valve, such as a "poppet" valve as shown in U.S. Patent 3 289 547 or a slide valve as shown in U.S. Patent 3 106 873 in response to an operator input.

Poppet valves require seats for both vacuum and air passages to be established on the housing of the valve to assure that partial vacuum and air presented to the movable wall are independent of each other when an input force is applied to the valve plunger to effect a brake application.

While the slide valve eliminates a seat on the housing, a seat is still required on the valve plunger which engages a resilient disc to regulate the communication of air to the movable wall.

Unfortunately, in both the poppet valve and the slide valve, the seating surfaces on the housing require machining which adds to the production costs of the servomotor. If the seating surfaces are not substantially smooth, a leak path can occur whereby air can be presented to the movable wall to create a pressure differential in the absence of an input force or to both sides of the wall and thereby eliminate or greatly reduce the development of the pressure differential in response to an input force.

It is an object of the present invention to provide a servomotor of the kind referred to above with a control valve device of simplified design and reduced cost, while simultaneously reducing the possibility of leak paths when fluids of different pressures are presented to opposite sides of the movable wall.

This object is achieved, according to the teaching of this invention, and in a servomotor of the kind comprising a housing with a first chamber separated from a second chamber by a movable wall assembly said movable wall assembly being displaced by a pressure differential between a higher fluid pressure in the first chamber and a lower fluid pressure in the second chamber and then developing an output force to move an output member in response to an input force, said pressure differential being controlled by said valve device which includes a plunger member adapted to be moved by said input force from a rest position, for which the first chamber is communicated to the second, lower pressure chamber through a first passage means, to a working position, for which the first chamber is isolated from the second chamber and is connected to a source of higher pressure fluid through a second passage means, thanks to the fact that said control valve device further includes a first resilient element with a normally opened passage therethrough which makes part of the first passage means, said first resilient element being compressible and then deforming itself to seal said normally opened passage when being engaged by the plunger member under the action of an input force, and a second resilient element with at least one normally closed passage therethrough which makes part of the second passages means, said second resilient element being extensible and then deforming itself to open said normally closed passage when being stretched by the plunger member under the action of said input force.

In a preferred embodiment of this invention, the movable wall assembly comprises a hub portion with a bore therewithin, said bore slidably receiving the plunger member of the control valve device as well as the head of an output member and further communicating with the housing chambers through conduits making part of said first and second passage means respectively; and the first resilient element is then composed of a disc of resilient material with a substantially diametrical passage therethrough which is aligned and cooperates with the conduits in the hub portion pertaining to the first passage means, said disc is placed in front of an end face of the plunger member, and said end face has a diametrically directed projection for engaging said disc, which projection is contained in a plane at substantially 90° from that containing said passage. The disc of resilient material may be either interposed between an end face of the plunger member and the movable wall assembly itself or an element carried thereon, or interposed between the end face of the plunger member and an opposite end face of the head of the output member; in this latter case, it simultaneously serves as a reaction means for providing an input member associated with said plunger member with an indication of the output force developed by the servomotor.

In this embodiment, the second resilient element is advantageously composed of a diaphragm of resilient material having a sleeve section which is attached at one end thereof to the wall of the bore of the hub portion and at its other end to the plunger member, said sleeve section being provided with slits which are normally held closed by the own resiliency of said diaphragm and get open when said diaphragm is stretched by a displacement of said plunger member from its rest position to its working position, said slits then cooperating with a conduit formed in the hub portion and with the bore of the latter to define the second passage means.

These and other features and advantages of the invention will become more readily apparent from the following description of a preferred embodiment and of a modification thereof, given by way of examples only, and with reference to the accompanying drawings, in which:

— Figure 1 is a schematic illustration of a servomotor having a control valve device made according to the principles of this invention;

— Figure 2 is a sectional view at enlarged scale of the control valve device of Figure 1 in an activated position;

— Figure 3 is a sectional view of a modified embodiment of the control valve device of Figures 1 and 2; and

— Figure 4 is a perspective view of the reaction disc of the control valve device shown in Figures 1 and 2.

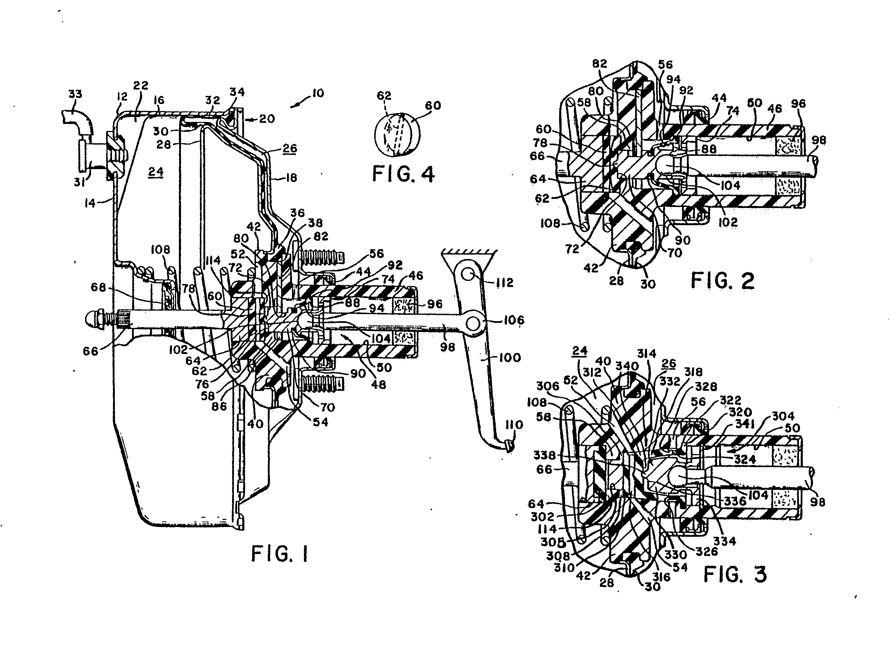

The fluid pressure servomotor 10 shown in Figure 1 has a front shell 12 with a closed end 14 from which an annular wall section 16 extends rearwardly. The front shell 12 is joined to a rear shell 18 through a closure member 20, for example of the type disclosed in U.S. Patent 3 977 299 to form a sealed cavity 22. The sealed cavity 22 is divided into a vacuum chamber 24 and a control chamber 26 by a movable wall 28 and an associated diaphragm 30, for example of the type disclosed in U.S. Patent 3 958 497. The vacuum chamber 24 is connected through check valve 31 and conduit 33 to a source of vacuum, usually the intake manifold of an engine for a vehicle. The diaphragm 30 has a rollable section 32 with a bead 34 on the end thereof retained by the closure member 20 and an internal lip 36 which snaps into a groove 38 on a hub 40 to hold the movable wall 28 against a shoulder 42.

The hub 40 has a cylindrical body 46 that extends through an opening 44 in the rear shell 18. The cylindrical body 46 has a stepped bore 50 which extends through the entire hub 40. The stepped bore 50 is connected to the vacuum or "second" chamber 24 through a first conduit 52 and to the control or "first" chamber 26 by second and third conduits 54 and 56. A land 58 in the hub 40 which separates the first and second conduits 52, 54 from the third conduit 56 provides a stop for a resilient disc 60 located in the stepped bore 50.

The resilient disc 60 has a passageway 62, see Figure 4, which connects the first conduit 52 with the second conduit 54 to define a first passage means or flow path between the vacuum chamber 24 and the control chamber 26. The head 64 of the output push rod 66 which is located in the stepped bore 50 abuts the disc 60 and extends through an opening 68 in the front shell 12.

Thereafter an input force moves a control valve device 48 to develop an operational force in the servomotor 10 which is transmitted through the output push rod 66 to a master cylinder (not shown) to effect a brake application.

In more particular detail, the valve device 48 includes the resilient disc 60, a plunger 70 and a diaphragm 88.

The plunger 70 which is located in bore 50 has a cylindrical body with a first end 72 and a second end 74. The first end 72 has a relative flat section 76 and an elevated section 78 that projects from the flat section 76. A key 82 located in a keyway in hub 40 has a forked end which extends into the stepped bore 50. One leg 86 of the forked end is located on one side of the cylindrical body and another leg (not shown) is located on the other side. The legs are separated by a flat section which extends into a slot 80 on the cylindrical body of plunger 70. The bead 36 holds the key 82 in slot 80 to assure that the elevated section or projection 78 of end 72 is aligned in a plane which is substantially 90° to the passageway 62 in the disc 60.

The diaphragm 88 has a sleeve section with a first bead 90 fixed in a groove on the cylindrical body of the plunger 70 and a second bead 92 fixed in a groove in the cylindrical body 46 of the hub 40. The diaphragm 88 has a series of slits 94 which are located in its sleeve section. The diaphragm 88 is in a rubber material and in the rest position shown in Figure 1, the internal resiliency thereof holds the slits 94 together to prevent air present in bore 50 from being communicated to the control chamber 26.

The plunger 70 has a socket 102 for retaining a ball 104 of the push rod 98. Push rod 98 extends through a filter 96 attached to the hub 46. The filter 96 prevents any contaminants in the air from being communicated into bore 50. The push rod 98 is connected to a brake pedal 100 through eye 106.

The above described device operates as follows:

When an internal combustion engine is operating, vacuum is produced at the intake manifold. This vacuum is communicated through conduit 33 to evacuate air from the servomotor 10 shown in Figure 1.

Any air present in chamber 26 flows to chamber 24, by way of conduits 52 and 54 in the hub 40 and passageway 62 in the disc 60, before passing through the one-way check valve 31 in conduit 33. A return spring 108 acts on hub 40 to urge the diaphragm 30 and movable wall 28 toward the rear shell 18 into the rest position as shown in Figure 1.

When an operator desires to effect a brake application, an input force is applied to brake pad 110 which causes the pedal 100 to pivot about a pin 112 and impact a linear input to push rod 98. This linear input moves plunger 70 toward land 58 in the hub 40.

As shown in Figure 2, initial movement of plunger 70 causes the projection 78 to move into the elastomeric disc 60 and deform the passage 62. Deformation of the passage interrupts the flow of communication between the vacuum chamber 24 and the control chamber 26. When the second or flat section 76 on the plunger 70 engages the disc 60, the deformed passage 62 should be completely sealed. Thereafter, the input force from the operator moves the plunger 70 into the disc 60 and causes the sleeve of the diaphragm 88 to expand and open slits 94. When slits 94 are opened, air in bore 50 is communicated into the control chamber 26 by way of conduit 56.

With air in chamber 26 and vacuum in chamber 24, a pressure differential is created across diaphragm 30 and movable wall 28 to create an output force. This output force is transmitted from wall 28 into shoulder 42 for distribution to head 64 through the elastomeric disc 60 to move the output push rod 66. The resistance to movement of push rod 66 creates a reaction force which acts on the disc 60 to compress same between head 64, the shoulder 114 of land 58 and the end 72 of plunger 70.

The reaction force acting on plunger 70 is carried back into the brake pedal 100 to provide the operator with an indication of the output force being developed by the servomotor 10. At the same time, the reaction force moves the plunger 70 sufficiently for the internal resiliency in the sleeve 88 to close the slits 94 and thereby match the pressure differential produced across the movable wall 28 and diaphragm 30 with the input force applied to pad 110.

When the input force applied to pad 110 by the operator terminates, projection 78 on the plunger 70 moves out of the elastomeric disc 60 to re-establish flow communication between chambers 24 and 26. With the flow path between chambers 24 and 26 opened, vacuum in conduit 33 evacuates the air from the servomotor to eliminate the pressure differential across the movable wall 28 and diaphragm 30 and allow the return spring 108 to move the hub 40 to the rest position shown in Figure 1.

In the embodiment shown in Figure 3, components which are the same as in Figure 1 are identified by the same numerals.

The difference between the embodiments in Figure 3 and Figure 1 resides in construction of the control device 304 through which the fluid for generating the pressure differential is presented to the control chamber 26.

The control device 304 shown in Figure 3 includes a resilient valve member 314 and a plunger 330, while there is provided a solid reaction disc 302 which is located in the stepped bore 50 between head 64 on the output push rod 66 and shoulder 114 on land 58. A cylindrical reaction plug member 305 which is located on land 58 has an annular shoulder 306 that engages a lateral face of the latter. The plug member 305 has a flat surface 310 which forms a base for a disc section 312 of the resilient valve member 314. The disc section 312 has a passage 316 therethrough which connects conduit 52 with conduit 54 in hub 40 to define a flow path or first passage means between chambers 24 and 26.

The resilient valve member 314 has a sleeve 318 which is integrally formed with the disc section 312. A lip 320 on the end of sleeve 318 is located in groove 322 in the cylindrical body 46 of the hub 40. The sleeve 318 has a series of radial slits 324 and 326 that are located in a groove 328 connected to conduit 56 to define with the latter a second passage means.

The plunger 330 has a cylindrical body with a bearing surface 334 that engages bore 50 and a contour surface 332 that is concentric to the sleeve 318. The cylindrical body has a flat surface 336 on the end thereof with a diametrically directed projection 338 that extends therefrom. A retainer 341 attached to the cylindrical body 46 of the hub 40 holds the plunger 330 in the bore 50 such that projection 338 extends into the disc 312.

When the control device 304 for the servomotor shown in Figure 3 receives an input force from push rod 98, plunger 330 moves in bore 50 causing projection 338 to deform the resilient disc 312 and interrupt communication through passage 316 between chambers 24 and 26. When surface 336 engages surface 340, passage 316 should be completely closed. Thereafter any further movement of the plunger 330 by the input force causes the sleeve 318 to expand and open slits 324, 326 to allow air to be communicated to chamber 26 through conduit 56.

With air in chamber 26 and vacuum in chamber 24, a pressure differential is created across movable wall 28 and diaphragm 30. This pressure differential creates a force that is transmitted into shoulder 42 of the hub 40. This output force is carried through reaction disc 302 and into head 64 for moving the output push rod 66 to provide a master cylinder with an operational input force. The resistance to movement of the push rod 66 and the output force transmitted to the hub 40 causes the reaction disc 302 to be compressed while at the same time a portion of the reaction disc 302 flows into land 58 for engagement with plug member 305. The force acting on plug 305 is thereafter carried through disc 312 to provide an operator with an indication of the output force being transmitted from the servomotor through push rod 66.

On termination of the input force on push rod 98, the resiliency of disc 312 moves surface 336 away from surface 340 and projection 338 out of the passage 316 to commence fluid communication between chambers 24 and 26. With the flow path between chambers 24 and 26 reopened, air is evacuated from the servomotor and the pressure differential eliminated across movable wall 28 and diaphragm 30 to allow return spring 108 to move the hub 40 against the rear shell 18 to the rest position.

## Claims

1. A control valve device (48; 304) for a pneumatically operated servomotor (10) of the kind comprising a housing with a first chamber (26) separated from a second chamber (24) by a movable wall assembly, (28, 30) said movable wall assembly (28, 30) being displaced by a pressure differential between a higher fluid pressure in the first chamber (26) and a lower fluid pressure in the second chamber (24) and then developing an output force to move an output member (66) in response to an input force, said pressure differential being controlled by said valve device which includes a plunger member (70; 330) adapted to be moved by said input force from a rest position, for which the first chamber (26) is communicated to the second, lower pressure chamber (24) through a first passage means, to a working position, for which the first chamber (26) is isolated from the second chamber (24) and is connected to a source of higher pressure fluid through a second passage means, characterized in that said control valve device (48; 304) further includes a first resilient element (60; 312) with a normally opened passage (62; 316) therethrough which makes part of the first passage means (52, 62, 54; 52, 316, 54), said first resilient element being compressible and then deforming itself to seal said normally opened passage when being engaged by the plunger member (70; 330) under the action of an input force, and a second resilient element (88; 318) with at least one normally closed passage (94; 324) therethrough which makes part of the second passage means (56, 94, 50; 56, 324, 50), said second resilient element being extensible and then deforming itself to open said normally closed passage when being stretched by the plunger member (70; 330) under the action of said input force.

2. A control valve device (48; 304) according to claim 1, wherein the movable wall assembly (28, 30) comprises a hub portion (40) with a bore therewithin, said bore slidably receiving the plunger member (70; 330) of the control valve device as well as the head of an output member (66) and further communicating with the housing chambers (24, 26) through conduits making part of said first and second passage means respectively, characterized in that the first resilient element is composed of a disc (60; 312) of resilient material with a substantially diametrical passage (62; 312) of resilient material with a substantially diametrical passage (62; 316) therethrough which is aligned and cooperates with the conduits (52, 54) in the hub portion (40) pertaining to the first passage means, in that said disc is placed in front of an end face (76; 336) of the plunger member (70; 330), and in that said end face has a diametrically directed projection (78; 338) for engaging said disc, which projection is contained in a plane at substantially 90° from that containing said passage.

3. A control valve device according to claim 2, characterized in that the disc (312) of resilient material is interposed between an end face (336) of the plunger member (330) and the movable wall assembly (28, 30) or an element (305) carried thereon.

4. A control valve device according to claim 2, characterized in that the disc (60) of resilient material is interposed between an end face (76) of the plunger member (70) and an opposite end face of the head (64) of the output member (66), thus simultaneously serving as a reaction means for providing an input member (98) associated with said plunger member with an indication of the output force developed by the servomotor.

5. A control valve device according to any of claims 2 to 4, characterized in that the second resilient element is composed of a diaphragm (88; 318) of resilient material having a sleeve section which is attached at one end thereof to the wall of the bore (50) of the hub portion (40, 46) and at its other end to the plunger member (70; 330), said sleeve section being provided with slits (94; 324, 326) which are normally held closed by the own resiliency of said diaphragm and get open when said diaphragm is stretched by a displacement of said plunger member from its rest position to its working position, said slits then cooperating with a conduit (56) formed in the hub (40, 46) and with the bore (50) of the latter to define the second passage means.

6. A control valve device according to claims 3 and 5, characterized in that said disc (312) and said diaphragm (318) are made as a unitary part of resilient material.

7. A control valve device according to any of the preceding claims, characterized in that its various components are so dimensioned that the closing of said normally opened passage (62; 316) takes place prior to said normally closed passage (94; 324) getting opened as a result of the displacement of said plunger member (70; 330) from its rest position to its working position.

## Revendications

1. Une valve de commande (48; 304) pour un servo-moteur à commande pneumatique du type comprenant un boîtier comportant une première chambre (26) séparée d'une seconde chambre (24) par un ensemble (28, 30) de cloison mobile, ledit ensemble (28, 30) de cloison mobile étant déplacé par une différence de pression entre un fluide à pression plus élevée dans la première chambre (24) et un fluide à plus basse pression dans la seconde chambre (24) et produisant alors une force de sortie pour déplacer un organe de sortie (66) en réponse à une force d'entrée, ladite différence de pression étant commandée par ladite valve qui comprend un organe plongeur (70; 330) agencé pour pouvoir être déplacé par ladite force d'entrée hors d'une position de repos, pour laquelle la première chambre (26) est mise en communication avec la seconde chambre (14) à plus basse pression par des premiers moyens de passage, jusqu'à une position de travail, pour laquelle la première chambre (26) est isolée de la seconde chambre (24) et est raccordée à une source de fluide à pression plus élevée par des seconds moyens de passage, caractérisée en ce que ladite valve de commande (48; 304) comprend, en outre, un premier élément élastique (60; 312) traversé par un passage (62; 316) normalement ouvert qui fait partie des premiers moyens de passage (52, 62, 54; 52, 316; 54), ledit premier élément élastique étant compressible et se déformant alors lui-même pour obturer ledit passage normalement ouvert lorsque l'organe plongeur (70; 330) vient en appui contre lui sous l'action d'une force d'entrée et un second élément élastique (88; 318) traversé par au moins un passage (94; 324) normalement fermé qui fait partie des seconds moyens de passage (56, 94, 50; 56, 324, 50), ledit second élément élastique étant extensible et se déformant alors lui-même pour ouvrir ledit passage normalement fermé lorsqu'il est allongé par l'organe plongeur (70; 330) sous l'action de ladite force d'entrée.

2. Une valve de commande (48; 304) selon la revendication 1, dans laquelle l'ensemble (28, 30) de cloison mobile comprend une partie de moyeu (40) dans laquelle est formé un alésage, ledit alésage recevant à coulissement l'organe plongeur (70; 330) de la valve de commande ainsi que la tête d'un organe de sortie (66) et communiquant, en outre, avec les chambres (24, 26) du boîtier par des conduits faisant respectivement partie desdits premiers et seconds moyens de passage, caractérisée en ce que le premier élément élastique est composé d'un disque (60; 312) de matière élastique traversé par un passage (62; 316) sensiblement diamétral qui est aligné et coopère avec les conduits (52; 54) de la partie de moyeu (40) qui font partie des premiers moyens de passage, en ce que ledit disque est placé face à une face d'extrémité (76; 336) de l'organe plongeur (70; 330) et en ce que ladite face comporte une protubérance (78; 338) orientée diamétralement pour venir en appui contre ledit disque, protubérance qui est contenue dans un plan sensiblement à 90° de celui contenant ledit passage.

3. Une valve de commande selon la revendication 2, caractérisée en ce que le disque (312) de matière élastique est interposé entre une face d'extrémité (336) de l'organe plongeur (330) et l'ensemble (28, 30) de paroi mobile ou un élément (305) porté par ce dernier.

4. Une valve de commande selon la revendication 2, caractérisée en ce que le disque (60) de matière élastique est interposé entre une face d'extrémité (76) de l'organe plongeur (70) et une face d'extrémité opposée de la tête (64) de l'organe de sortie, servant ainsi simultanément de moyens de réaction pour fournir à un organe d'entrée (98) associé audit organe plongeur une indication de la force de sortie engendrée par le servo-moteur.

5. Une valve de commande selon une quelconque des revendications 2 à 4, caractérisée en ce que le second élément élastique est composé d'un diaphragme (88; 318) en matière élastique ayant une partie de manchon qui est fixée à une extrémité à la paroi de l'alésage (50) de la partie de moyeu (40, 46) et à son autre extrémité à l'organe plongeur (70; 130) ladite partie de manchon étant munie de fentes (94; 324, 326) qui sont normalement maintenues fermées par la propre élasticité dudit diaphragme et s'ouvrent lorsque ledit diaphragme est allongé par un déplacement dudit organe plongeur de sa position de repos à sa position de travail, lesdites fentes coopérant alors avec un conduit (56) formé dans la partie de moyeu (40, 46) et avec l'alésage (50) de cette dernière pour former les seconds moyens de passage.

6. Une valve de commande selon les revendications 3 et 5, caractérisée en ce que ledit disque (312) et ledit diaphragme (318) sont fabriqués sous la forme d'une pièce unitaire de matière élastique.

7. Une valve de commande selon l'une quelconque des revendications précédentes, caractérisée en ce que ses divers éléments sont dimensionnés de telle sorte que la fermeture dudit passage (62; 316) normalement ouvert prend place avant que ledit passage (94; 324) normalement fermé s'ouvre par suite du déplacement dudit organe plongeur (70; 330) de sa position de repos à sa position de travail.

**Patentansprüche**

1. Steuerventil (48; 304) für einen pneumatisch betätigten Servomotor (10), mit einem Gehäuse, in welchem durch eine bewegbare Wandeinheit (28, 30) eine erste Kammer (26) von einer zweiten Kammer (24) abgetrennt ist, wobei die bewegbare Wandeinheit (28, 30) durch Differenzdruckbeaufschlagung verlagerbar ist, die durch höhere Druckbeaufschlagung in der ersten Kammer (26) und niederere Druckbeaufschlagung in der zweiten Kammer (24) erhalten wird, und dann in Abhängigkeit von einer Eingangskraft auf ein Abtriebsteil (66) eine Ausgangskraft ausübt, wobei die Differenzdruckbeaufschlagung durch das Steuerventil gesteuert wird, welches ein Tauchkolbenteil (70; 330) aufweist, das durch die Eingangskraft aus einer Ruhestellung, in welcher die erste Kammer (26) über einen ersten Kanal mit der unter niederem Druck stehenden zweiten Kammer (24) verbunden ist, in eine Arbeitsstellung verlagerbar ist, in welcher die erste Kammer (26) von der zweiten Kammer (24) getrennt und über einen zweiten Kanal mit einer Hochdruckquelle verbunden ist, dadurch gekennzeichnet, daß das Steuerventil (48; 304) ein erstes federndes Element (60; 312) aufweist, in welchem ein normalerweise offener Durchgangskanal (62; 316) vorgesehen ist, der einen Teil des ersten Kanales (52, 62, 54; 52, 316, 54) bildet, wobei das erste federnde Element so komprimierbar und verformbar ist, daß es beim Inberührungkommen mit dem mit der Eingangskraft beaufschlagten Tauchkolbenteil (70; 330) den normalerweise offenen Durchgangskanal verschließt, und ein zweites federndes Element (88; 318) aufweist, in welchem zumindest ein normalerweise geschlossener Durchgangskanal (94; 302) ausgebildet ist, welcher einen Teil des zweiten Kanales (56, 94, 50; 56, 324, 50) darstellt, wobei das zweite federnde Element so verlängerbar und verformbar ist, daß der normalerweise geschlossene Durchgangskanal geöffnet wird, wenn das zweite federnde Teil durch das mit der Eingangskraft beaufschlagte Tauchkolbenteil gestreckt wird.

2. Steuerventil (48; 304) nach Anspruch 1, bei welchem die bewegbare Wandeinheit (28, 30) einen Nabenabschnitt (40) aufweist, in dem eine Bohrung ausgebildet ist, wobei in dieser Bohrung das Tauchkolbenteil (70; 330) und auch der Kopf eines Abtriebsteiles (66) verschiebbar Aufnahme finden und wobei diese Bohrung mit den Gehäusekammern (24, 26) über Leitungen in Verbindung steht, welche einen Teil des ersten bzw. zweiten Kanales darstellen, dadurch gekennzeichnet, daß das erste federnde Element durch eine aus federnd nachgiebigen Material hergestellte Scheibe (60; 312) gebildet ist, in welcher ein im wesentlichen in diametraler Richtung verlaufender Durchgangskanal (62; 316) ausgebildet ist, der mit den im Nabenabschnitt (40) ausgebildeten Leitungen (52, 54) fluchtet und zusammenarbeitet, welche zum ersten kanal gehören, daß die Scheibe vor einer Stirnfläche (76; 336) des Tauchkolbenteiles (70; 330) angeordnet ist und daß die Stirnfläche eine in diametraler Richtung verlaufende Erhebung (78; 338) aufweist, welche an der Scheibe anliegt und in einer Ebene liegt, die einen Winkel von im wesentlichen 90° mit der den Kanal enthaltenden Ebene einschließt.

3. Steuerventil nach Anspruch 2, dadurch gekennzeichnet, daß die aus federnd nachgiebigem Material hergestellte Scheibe (312) zwischen einer Stirnfläche (336) des Tauchkolbenteiles (330) und der bewegbaren Wandeinheit (28, 30) oder einem von der letzteren getragenen Bauteil (305) angeordnet ist.

4. Steuerventil nach Anspruch 2, dadurch gekennzeichnet, daß die aus federnd nachgiebigem Material hergestellte Scheibe (60) zwischen einer Stirnfläche (76) des Tauchkolbenteiles (70) und einer gegenüberliegenden Stirnfläche eines Kopfes (64) des Abtriebsteiles (66) angeordnet ist, so daß sie zugleich als Reaktionsteil dienen kann, wodurch ein dem Tauchkolbenteil zugeordnetes Eingangsteil (98) erhalten wird, wobei eine Anzeige für die vom Servomotor abgegebene Abtriebskraft erfolgt.

5. Steuerventil nach einem der Ansprüche 2—4, dadurch gekennzeichnet, daß das zweite federnde Element durch eine Membran (88; 318) aus elastisch nachgiebigem Material gebildet ist, welche einen Hülsenabschnitt aufweist, der an seinem einen Ende an der Wand der Bohrung (50) des Nabenabschnittes (40, 46) befestigt ist und mit seinem anderen Ende am Tauchkolbenteil (70; 330) befestigt ist, wobei der Hülsenabschnitt Schlitze (94; 324, 326) aufweist, welche normalerweise durch das Eigenfedervermögen der Membran geschlossen gehalten werden und dann geöffnet werden, wenn die Membran durch Verschieben des Tauchkolbenteiles aus seiner Ruhestellung in seine Arbeitsstellung gestreckt wird, und wobei die Schlitze zusammen mit einer in dem Nabenabschnitt (40, 46) ausgebildeten Leitung (56) und mit der Bohrung (50) des Nabenabschnittes den zweiten Kanal bilden.

6. Steuerventil nach den Ansprüchen 3 und 5, dadurch gekennzeichnet, daß die Scheibe (312) und die Membran (318) ein einstückiges Teil aus federnd nachgiebigem Material sind.

7. Steuerventil nach einem der vorstehenden Ansprüche, dadurch gekennzeichnet, daß die verschiedenen Bauteile so dimensioniert sind, daß das Schließen des normalerweise offenen Durchgangskanales (62; 310) erfolgt, bevor der normalerweise geschlossene Durchgangskanal (94; 324) geöffnet wird, wenn das Tauchkolbenteil (70; 330) aus seiner Ruhestellung in seine Arbeitsstellung verlagert wird.

FIG. 2

FIG. 3

FIG. 4

FIG. I